# EUROPÄISCHE PATENTANMELDUNG

(11) **EP 2 301 707 A1**
(43) Veröffentlichungstag der Anmeldung: **30.03.2011**
(21) Anmeldenummer: 10014448.4
(22) Anmeldetag: 21.12.2005
(51) Int. Cl.: B23K 26/38, F01D 5/18

(54) **Verfahren zur Herstellung eines Lochs und Vorrichtung**

(30) Priorität: 14.01.2005 EP 05000729
(62) Teilanmeldung aus: 05847514.6
(71) Anmelder: Siemens Aktiengesellschaft, 80333 München (DE)
(72) Erfinder: Beck, Thomas, 16341 Panketal (DE); Settegast, Silke, 10439 Berlin (DE); Wolkers, Lutz Dr., 40625 Düsseldorf (DE)

(57) **Zusammenfassung**

Bisherige Verfahren zur Erzeugung eines Lochs in einem Bauteil sind sehr zeitaufwändig und kostenintensiv, da spezielle Laser mit kurzen Laserpulslängen verwendet werden.

Das erfindungsgemäße Verfahren variiert die Laserpulslängen, wobei kurze Laserpulslängen nur in dem zu entfernenden Bereich verwendet werden, in dem sich ein Einfluss auf das Durch- bzw. Ausströmungsverhalten bemerkbar macht. Dies ist z.B. die innere Oberfläche (12) eines Diffusors (13) eines Lochs (7), das mit kurzen Laserpulslängen sehr genau hergestellt werden kann.

## Beschreibung

Die Erfindung betrifft ein Verfahren zur Herstellung eines Lochs gemäß Anspruch 1, bei dem mittels gepulster Energiestrahlen in einem Bauteil ein Loch erzeugt wird, und eine Vorrichtung mit Lasern gemäß Anspruch 40.

Bei vielen Bauteilen, insbesondere bei Gussteilen, müssen nachträglich Abtragungen wie Vertiefungen oder Durchgangslöcher erzeugt werden. Insbesondere bei Turbinenbauteilen, die zur Kühlung Filmkühllöcher aufweisen, werden nach der Herstellung des Bauteils Löcher nachträglich eingefügt.

Solche Turbinenbauteile weisen oft auch Schichten auf, wie z.B. eine metallische Schicht oder Zwischenschicht und/oder eine keramische äußere Schicht. Die Filmkühllöcher müssen dann durch die Schichten und das Substrat (Gussteil) hindurch erzeugt werden.

Die US-PS 6,172,331 sowie die US-PS 6,054,673 offenbaren eine Laserbohrmethode, um in Schichtsystemen Löcher einzufügen, wobei ultrakurze Laserpulslängen verwendet werden.

Es wird aus einem bestimmten Laserpulslängenbereich eine Laserpulslänge ausgesucht und damit das Loch erzeugt.

Die DE 100 63 309 A1 offenbart ein Verfahren zur Herstellung einer Kühlluftöffnung mittels eines Lasers, bei dem die Laserparameter so eingestellt werden, dass Material durch Sublimieren abgetragen wird.

Die US-PS 5,939,010 offenbart zwei alternative Verfahren zur Erzeugung einer Vielzahl von Löchern. Bei dem einen Verfahren (Fig. 1, 2 der US-PS) wird zuerst vollständig ein Loch erzeugt, bevor das nächste Loch erzeugt wird. In dem zweiten Verfahren werden die Löcher schrittweise erzeugt, indem zuerst ein erster Teilbereich eines ersten Lochs, dann ein erster Teilbereich eines zweiten Lochs usw. erzeugt wird (Fig. 10 der US-PS). Dabei können bei den zwei Verfahren unterschiedliche Pulslängen verwendet werden, aber immer die gleichen Pulslängen innerhalb eines Verfahrens. Die zwei Verfahren können nicht miteinander verknüpft werden.

Die Querschnittsfläche des abzutragenden Bereichs entspricht immer dem Querschnitt des herzustellenden Lochs.

Die US-PS 5,073,687 offenbart die Verwendung eines Lasers zur Herstellung eines Lochs in einem Baut4eil, das aus einem Substrat mit beidseitiger Kupferschicht gebildet ist. Dabei wird zuerst mittels längerer Pulsdauer ein Loch durch einen Kupferfilm erzeugt und dann mittels kürzerer Pulse ein Loch in dem Substrat, bestehend aus einem Harz, wobei anschließend ein Loch durch eine Kupferschicht auf der Rückseite mit höherer Ausgangsleistung des Lasers erzeugt wird. Die Querschnittsfläche des abgetragenen Bereichs entspricht dem Querschnitt des herzustellenden Lochs.

Die US-PS 6,479,788 B1 offenbart ein Verfahren zur Herstellung eines Lochs, bei dem in einem ersten Schritt längere Pulslängen verwendet werden als in einem weiteren Schritt. Die Pulsdauer wird hier variiert, um eine möglichst gute Rechteckform im Loch herzustellen. Dabei wird auch die Querschnittsfläche des Strahls bei abnehmender Pulslänge vergrößert.

Die Verwendung von solchen ultrakurzen Laserpulsen ist wegen deren geringen mittleren Leistungen teuer und sehr zeitintensiv.

Es ist daher Aufgabe der Erfindung dieses Problem zu überwinden.

Die Aufgabe wird gelöst durch ein Verfahren gemäß Anspruch 1, bei dem verschiedene Pulslängen verwendet werden, wobei ein Energiestrahl bei den kürzeren Pulslängen verfahren wird. Besonders vorteilhaft ist es, wenn nur in einem der ersten Abtragungsschritte kürzere Pulse verwendet werden, um optimale Eigenschaften in einem äußeren Oberbereich der Trennfläche zu erzeugen, da diese entscheidend sind für das Ausströmverhalten eines Mediums aus dem Loch sowie für das Umströmverhalten eines Mediums um dieses Loch.

Im Inneren des Lochs sind die Eigenschaften der Trennfläche eher unkritisch, sodass dort längere Pulse verwendet werden können, die inhomogene Trennflächen verursachen können.

Eine weitere Aufgabe ist es, eine Vorrichtung aufzuzeigen, mit der das Verfahren einfach und schnell durchgeführt werden kann.

Diese Aufgabe wird gelöst durch eine Vorrichtung gemäß Anspruch 40.

In den Unteransprüchen des Verfahrens bzw. der Vorrichtung sind weitere vorteilhafte Maßnahmen des Verfahrens oder der Vorrichtung aufgelistet.

Die in den Unteransprüchen aufgelisteten Maßnahmen können in vorteilhafter Art und Weise miteinander kombiniert werden.

Die Erfindung wird anhand der Figuren näher erläutert.

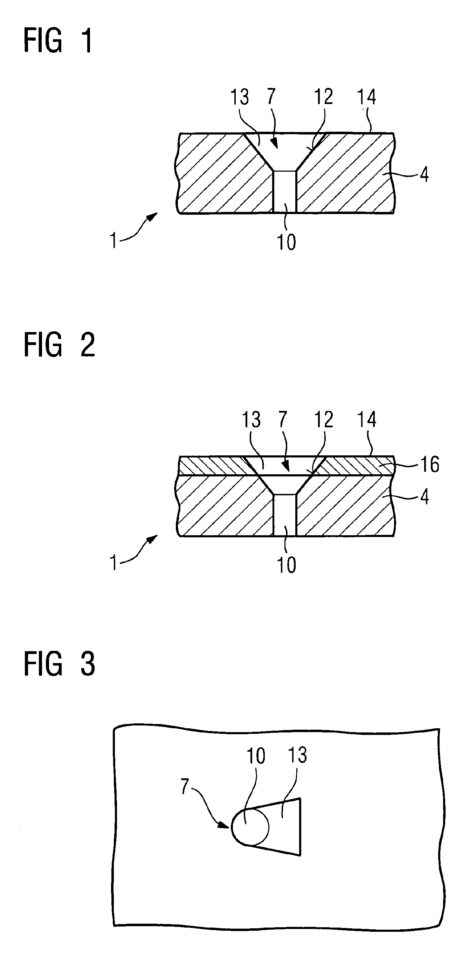

Es zeigen
- Figur 1: ein Loch in einem Substrat,
- Figur 2: ein Loch in einem Schichtsystem,
- Figur 3: eine Draufsicht auf ein herzustellendes Durch- gangsloch,

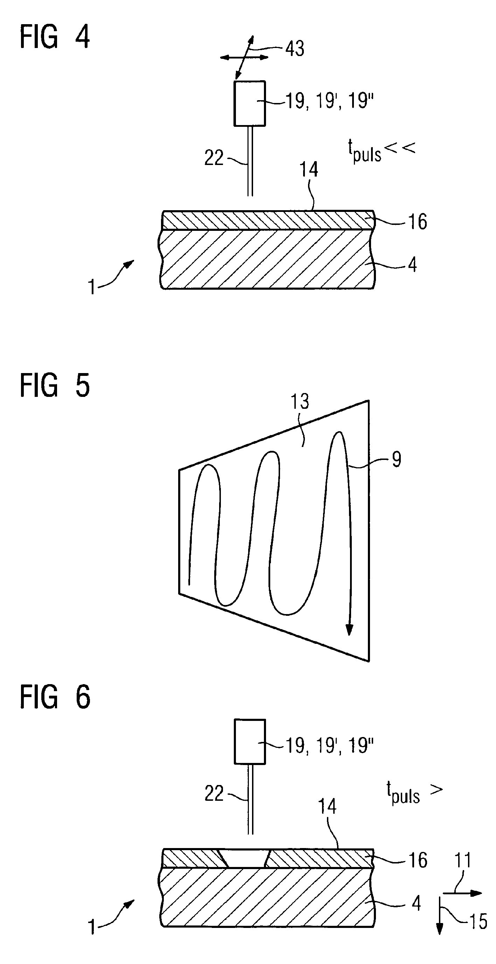

- Figur 4 bis 11: Abtragungsschritte des erfindungsgemäßen Verfahrens,

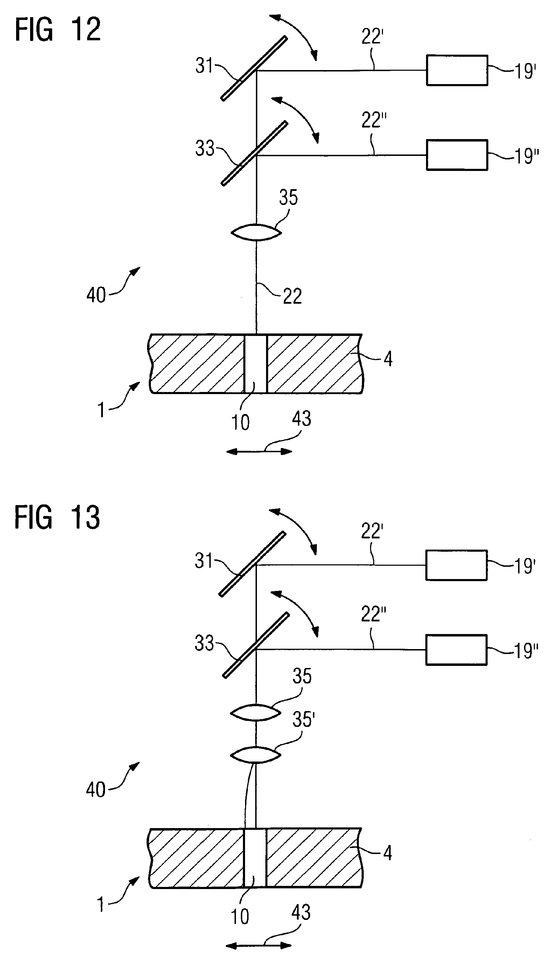

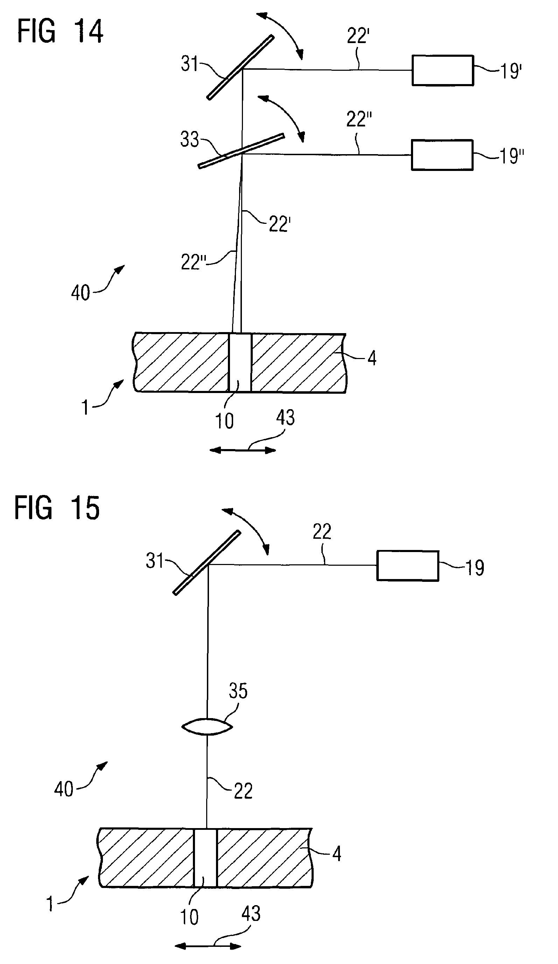

- Figur 12 - 15: erfindungsgemäße Apparaturen, um das Verfahren durchzuführen,

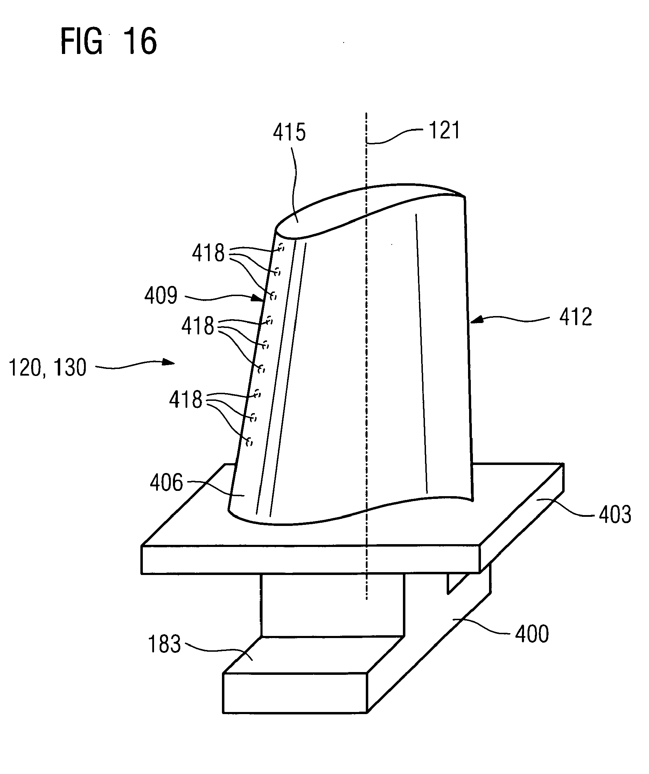

- Figur 16: eine Turbinenschaufel,

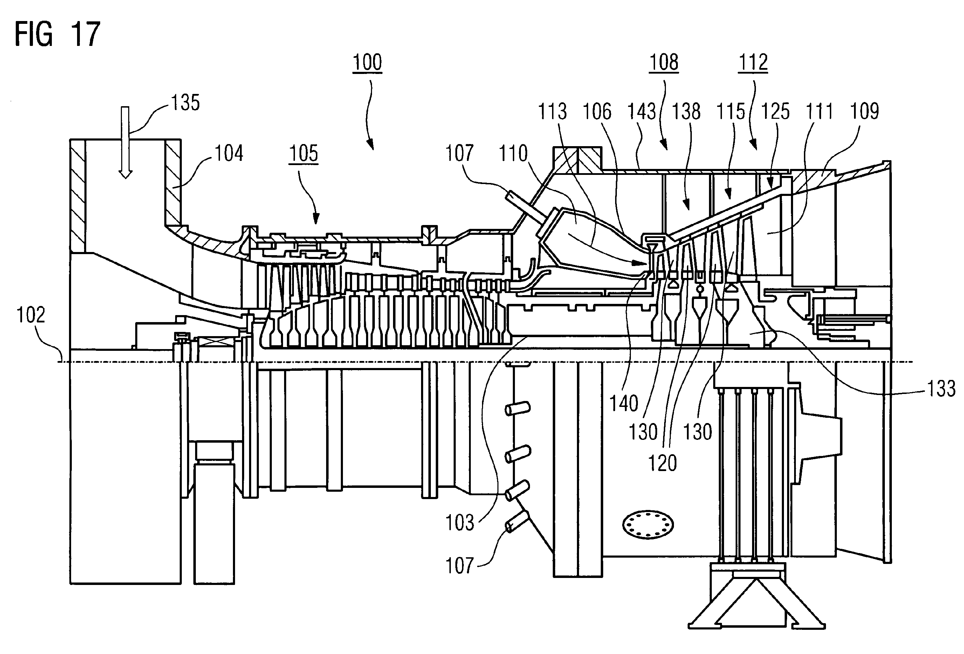

- Figur 17: eine Gasturbine und

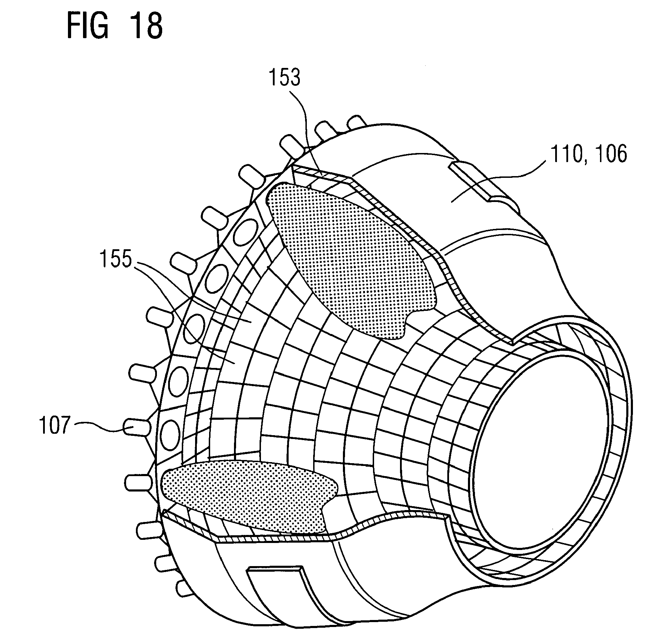

- Figur 18: eine Brennkammer.

### Beschreibung des Bauteils mit Loch

Figur 1 zeigt ein Bauteil 1 mit einem Loch 7.

Das Bauteil 1 besteht aus einem Substrat 4 (beispielsweise ein Gussteil oder DS bzw. SX - Bauteil).

Das Substrat 4 kann metallisch und/oder keramisch sein. Insbesondere bei Turbinenbauteilen, wie z.B. Turbinenlauf- 120 oder -leitschaufeln 130 (Fig. 16, 17), Hitzeschildelementen 155 (Fig. 18) sowie anderen Gehäuseteilen einer Dampf- oder Gasturbine 100 (Figur 17), aber auch einer Flugzeugturbine, besteht das Substrat 4 aus einer nickel-, kobalt- oder eisenbasierten Superlegierung. Bei Turbinenschaufeln für Flugzeuge besteht das Substrat 4 beispielsweise aus Titan oder einer Titan-Basislegierung.

Das Substrat 4 weist ein Loch 7 auf, das beispielsweise ein Durchgangsloch ist. Es kann aber auch ein Sackloch sein.

Das Loch 7 besteht aus einem unteren Bereich 10, der von einer Innenseite des Bauteils 1 ausgeht und der beispielsweise symmetrisch (beispielsweise kreisförmig, oval oder rechteckförmig) ausgebildet ist, und einem oberen Bereich 13, der gegebenenfalls als Diffusor 13 an einer äußeren Oberfläche 14 des Substrats 4 ausgebildet ist. Der Diffusor 13 stellt eine Verbreiterung des Querschnitts gegenüber dem unteren Bereich 10 des Lochs 7 dar.

Das Loch 7 ist z.B. ein Filmkühlloch. Insbesondere die innen liegende Oberfläche 12 des Diffusors 13, also im oberen Bereich des Lochs 7, soll glatt sein, weil Unebenheiten unerwünschte Turbulenzen, Umlenkungen erzeugen, um ein optimales Ausströmen eines Mediums, insbesondere eines Kühlmediums aus dem Loch 7 zu ermöglichen. An die Qualität der Lochoberfläche im unteren Bereich 10 des Lochs 7 werden deutlich geringere Anforderungen gestellt, da das Anströmverhalten hierdurch nur wenig beeinflusst wird.

Figur 2 zeigt ein Bauteil 1, das als Schichtsystem ausgeführt ist.

Auf dem Substrat 4 ist zumindest eine Schicht 16 vorhanden. Dies kann beispielsweise eine metallische Legierung des Typs MCrA1X sein, wobei M für zumindest ein Element der Gruppe Eisen, Kobalt oder Nickel steht. X steht für Yttrium und/oder zumindest ein Element der Seltenen Erden.

Die Schicht 16 kann auch keramisch sein.

Auf der MCrA1X-Schicht kann noch eine weitere Schicht (nicht dargestellt) vorhanden sein, beispielsweise eine keramische Schicht, insbesondere eine Wärmedämmschicht (die MCrA1X-Schicht ist dann eine Zwischenschicht).

Die Wärmedämmschicht ist beispielsweise eine vollständig oder teilstabilisierte Zirkönoxidschicht, insbesondere eine EB-PVD-Schicht oder plasmagespritzte (APS, LPPS, VPS), HVOF oder CGS (cold gas spraying) Schicht.

In dieses Schichtsystem 1 wird ebenfalls ein Loch 7 mit dem unteren Bereich 10 und dem Diffusor 13 eingebracht.

Die vorstehenden Ausführungen zur Herstellung des Lochs 7 gelten für Substrate 4 mit und ohne Schicht 16 oder Schichten 16.

Die Figur 3 zeigt eine Draufsicht auf ein Loch 7.

Der untere Bereich 10 könnte durch ein spanendes Fertigungsverfahren hergestellt werden. Hingegen wäre dies bei dem Diffusor 13 nicht oder nur mit sehr großem Aufwand möglich.

Das Loch 7 kann auch unter einem spitzen Winkel zur Oberfläche 14 des Bauteils 1 verlaufen.

### Verfahren

Die Figuren 4, 5 und 6 zeigen Abtragungsschritte des erfindungsgemäßen Verfahrens.

Erfindungsgemäß werden Energiestrahlen 22 mit verschiedenen Pulslängen während des Verfahrens verwendet.

Der Energiestrahl kann ein Elektronenstrahl, Laserstrahl oder Hochdruckwasserstrahl sein. Im Folgenden wird nur exemplarisch auf den Einsatz eines Lasers eingegangen.

Insbesondere bei einem der ersten Abtragungsschritte werden kürzere Laserpulse (tpuls <<) kleiner gleich 500ns, insbesondere kleiner gleich 100ns verwendet. Es können auch Laserpulslängen im Bereich von Pikosekunden oder Femtosekunden verwendet werden.

Bei der Verwendung von kürzeren Laserpulsen kleiner gleich 500ns (Nanosekunden), insbesondere kleiner gleich 100ns finden nahezu keine Aufschmelzungen im Bereich der Trennfläche statt. Somit bilden sich auf der Innenfläche 12 des Diffusors 13 keine Risse aus und exakte, ebene Geometrien können so erzeugt werden.

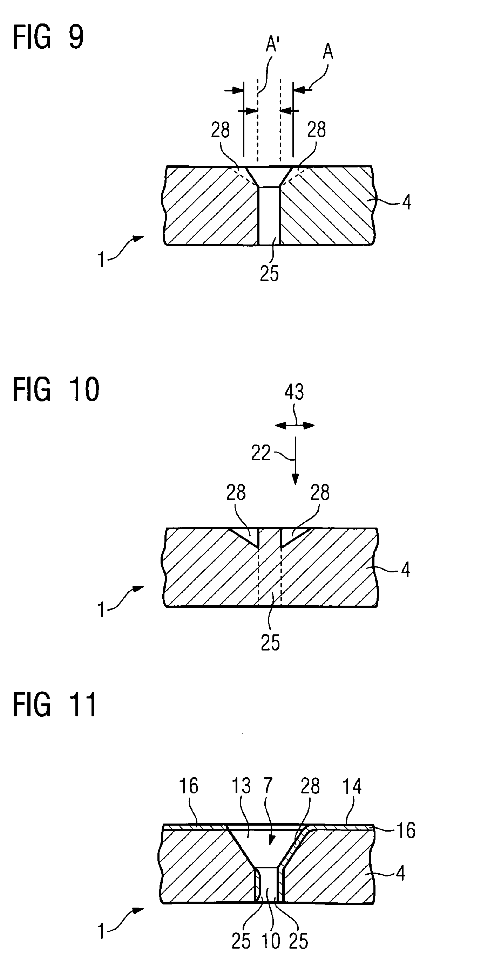

In einem der ersten Abtragungsschritte wird ein erster Teilbereich des Lochs 7 in dem Bauteil 1 erzeugt. Dieser kann beispielsweise zumindest teilweise oder ganz dem Diffusor 13 entsprechen (Fig. 6, 9). Der Diffusor 13 ist größtenteils in einer keramischen Schicht angeordnet. Insbesondere wird zur Erzeugung des gesamten Diffusors 13 eine kürzere Pulslänge verwendet. Insbesondere wird zur Erzeugung des Diffusors 13 eine konstante kürzere Pulslänge verwendet. Die Zeit zur Herstellung des Diffusors 13 entspricht im Verfahren beispielsweise den ersten Abtragungsschritten.

Bei der Erzeugung des Diffusors 13 wird ein Laser 19, 19', 19" mit seinen Laserstrahlen 22, 22', 22" in einer lateralen Ebene 43 hin und her verfahren, wie es beispielsweise in Figur 5 dargestellt ist. Der Diffusor 13 wird entlang einer Verfahrlinie 9 beispielsweise mäanderförmig abgefahren, um hier Material in einer Ebene abzutragen (Schritt Fig. 4 nach Fig. 6).

Vorzugsweise, aber nicht notwendigerweise, wenn eine metallische Zwischenschicht oder das Substrat 4 erreicht wird, werden längere Laserpulslängen (tpuls >) größer als 100ns, insbesondere größer als 500ns und insbesondere bis 10ms verwendet, um den restlichen unteren Bereich 10 des Lochs zu erzeugen, wie er in Figur 1 oder 2 dargestellt ist.

Der Diffusor 13 befindet sich zumindest größtenteils in einer keramischen Schicht, kann sich aber auch in eine metallische Zwischenschicht 16 und/oder in das metallische Substrat 4 hinein erstrecken, so dass auch metallisches Material auch noch zum Teil mit kürzeren Pulslängen abgetragen werden kann. Insbesondere werden zur Erzeugung des unteren Bereichs 10 des Lochs 7 größtenteils oder vollständig längere, insbesondere zeitlich konstante, Laserpulse verwendet. Die Zeit zur Herstellung des unteren Bereichs 10 entspricht im Verfahren den letzten Abtragungsschritten.

Bei der Verwendung von längeren Laserpulsen wird der zumindest eine Laser 19, 19', 19" mit seinen Laserstrahlen 22, 22', 22" beispielsweise nicht in der Ebene 43 hin und her bewegt. Da sich die Energie aufgrund der Wärmeleitung in dem Material der Schicht 16 oder des Substrats 4 verteilt und durch jeden Laserpuls neue Energie hinzugefügt wird, wird durch Materialverdampfung großflächig Material in der Weise abgetragen, dass die Fläche, in der das Material abgetragen wird, ungefähr der Querschnittsfläche A des herzustellenden Durchgangslochs 7, 10 entspricht. Diese Querschnittsfläche kann über die Energieleistung und Pulsdauer sowie die Führung des Laserstrahls eingestellt werden.

Die Laserpulslängen eines einzigen Lasers 19 oder mehrerer Laser 19', 19'' können beispielsweise kontinuierlich verändert werden, beispielsweise vom Beginn bis zum Ende des Verfahrens. Das Verfahren beginnt mit der Abtragung von Material an der äußeren Oberfläche 14 und endet bei Erreichen der gewünschten Tiefe des Lochs 7.

Das Material wird beispielsweise schichtweise in Ebenen 11 (Fig. 6) und in einer Axialrichtung 15 fortschreitend abgetragen.

Ebenso können die Pulslängen auch diskontinuierlich verändert werden. Vorzugsweise werden zwei verschiedene Pulslängen während des Verfahrens verwendet. Bei den kürzeren Pulslängen (beispielsweise ≤ 500ms) wird der zumindest eine Laser 19, 19' verfahren und bei den längeren Pulslängen (beispielsweise 0,4ms) beispielsweise nicht, weil durch Wärmeleitung der Energieeintrag ohnehin über eine größere Fläche erfolgt, als es dem Querschnitt des Laserstrahls entspricht.

Während der Bearbeitung kann der restliche Teil der Oberfläche mit einer Pulverschicht, insbesondere mit einer Maskierung gemäß der EP 1 510593 A1 geschützt werden. Die Pulver (BN, ZrO2) und die Korngrößenverteilung gemäß der EP 1 510 593 A1 sind Teil dieser Offenbarung.

Dies ist insbesondere dann sinnvoll, wenn ein metallisches Substrat oder ein Substrat mit metallischer Schicht bearbeitet wird, das noch keine keramische Schicht aufweist.

### Laserparameter

Bei der Verwendung von Pulsen mit einer bestimmten Pulslänge ist die Ausgangsleistung des Lasers 19, 19', 19" beispielsweise konstant.

Bei den längeren Pulslängen wird eine Ausgangsleistung des Lasers 19, 19', 19" von mehreren 100 Watt, insbesondere 500 Watt verwendet.

Bei den kürzeren Laserpulslängen wird eine Ausgangsleistung des Lasers 19, 19' von kleiner 300 Watt verwendet.

Ein Laser 19, 19' mit einer Wellenlänge von 532 nm wird beispielsweise nur zur Erzeugung kürzerer Laserpulse verwendet. Bei den längeren Laserpulslängen werden insbesondere eine Laserpulsdauer von 0,4ms und eine Energie (Joule) des Laserpulses von 6J bis 10J, insbesondere 8J verwendet, wobei eine Leistung (Kilowatt) von 10kW bis 50kW, insbesondere 20kW bevorzugt wird.

Die kürzeren Laserpulse weisen eine Energie im einstelligen oder zweistelligen Millijoule-Bereich (mJ) auf, vorzugsweise im einstelligen Millijoule-Bereich, wobei die verwendete Leistung insbesondere meist im einstelligen Kilowattbereich liegt.

### Anzahl Laser

Bei dem Verfahren können ein Laser 19 bzw. zwei oder mehr Laser 19', 19" verwendet werden, die gleichzeitig oder nacheinander eingesetzt werden. Die ähnlichen oder verschiedenen Laser 19, 19', 19" weisen beispielsweise verschiedene Bereiche hinsichtlich ihrer Laserpulslängen auf. So kann z.B. ein erster Laser 19' Laserpulslängen kleiner gleich 500ns, insbesondere kleiner 100ns erzeugen und ein zweiter Laser 19" Laserpulslängen größer 100ns, insbesondere größer 500ns erzeugen.

Zur Erzeugung eines Lochs 7 wird zuerst der erste Laser 19' eingesetzt. Für die weitere Bearbeitung wird dann der zweite Laser 19" verwendet oder umgekehrt.

Bei der Herstellung des Durchgangslochs 7 kann auch nur ein Laser 19 verwendet werden. Insbesondere wird ein Laser 19 verwendet, der beispielsweise eine Wellenlänge von 1064nm aufweist und der sowohl die längeren als auch die kürzeren Laserpulse erzeugen kann.

### Abfolge der herzustellenden Lochbereiche

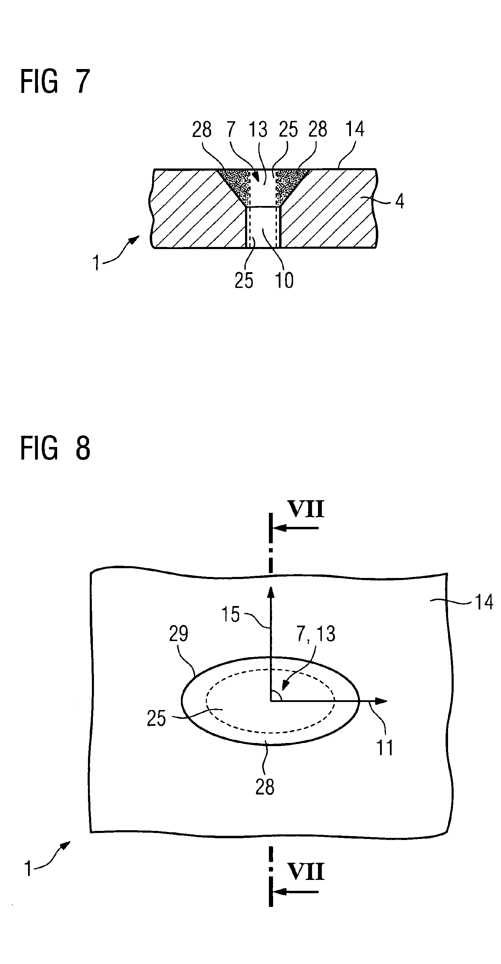

Figur 7 zeigt einen Querschnitt durch ein Loch 7.

Hier erfolgt zuerst eine Grobbearbeitung mit Laserpulslängen größer als 100ns, insbesondere größer 500ns und eine Feinbearbeitung mit Laserpulslängen kleiner gleich 500ns, insbesondere kleiner gleich 100ns.

Der untere Bereich 10 des Lochs 7 wird vollständig und nur ein Bereich des Diffusors 13 wird größtenteils mit einem Laser 19, der Laserpulslängen größer als 100ns, insbesondere größer gleich 500ns aufweist, bearbeitet (erste Abtragungsschritte).

Zur Fertigstellung des Lochs 7 bzw. des Diffusors 13 muss nur noch ein dünner äußerer Randbereich 28 im Bereich des Diffusors 13 mittels eines Lasers 19, 19', 19", der Laserpulslängen kleiner gleich 500ns, insbesondere kleiner 100ns erzeugen kann, bearbeitet werden (letzte Abtragungsschritte).

Dabei wird der Laserstrahl verfahren.

Figur 8 zeigt eine Draufsicht auf ein Loch 7 des Bauteils 1. Die verschiedenen Laser 19, 19', 19" bzw. die verschiedenen Laserpulslängen dieser Laser 19, 19', 19" werden in verschiedenen Abtragungsschritten eingesetzt.

Zuerst erfolgt beispielsweise eine Grobbearbeitung mit großen Laserpulslängen (> 100ns, insbesondere >500ns). Dadurch wird der größte Teil des Lochs 7 erzeugt. Dieser innere Bereich ist mit dem Bezugszeichen 25 gekennzeichnet. Nur noch ein äußerer Randbereich 28 des Lochs 7 bzw. des Diffusors 13 muss entfernt werden, um die Endmaße des Lochs 7 zu erreichen. Dabei wird der Laserstrahl 22, 22' in der Ebene der Oberfläche 14 verfahren.

Erst wenn der äußere Randbereich 28 mittels eines Lasers 19, 19' mit kürzeren Laserpulslängen (≤ 500ns, insbesondere < 100ns) bearbeitet worden ist, ist das Loch 7 bzw. der Diffusor 13 fertig gestellt.

Die Kontur 29 des Diffusors 13 wird also mit kürzeren Laserpulsen hergestellt, wodurch der äußere Randbereich 28 feiner und exakter abgetragen wird und daher frei von Rissen und Aufschmelzungen ist.

Das Material wird beispielsweise in einer Ebene 11 (senkrecht zur Axialrichtung 15) abgetragen.

Ebenso kann bei den längeren Pulslängen der Querschnitt A des abzutragenden Bereichs bei der Herstellung des Lochs 7 in die Tiefe des Substrats 4 hinein ständig verkleinert werden bis auf A', sodass der äußere Randbereich 28 gegenüber Figur 7 verkleinert ist (Fig. 9). Dies geschieht durch Einstellungen von Energie und Pulsdauer.

Eine Alternative bei der Herstellung des Lochs 7 besteht darin, zuerst den äußeren Randbereich 28 mit kürzeren Laserpulslängen (≤ 500ns) bis zu einer Tiefe in Axialrichtung 15, die einer Ausdehnung des Diffusors 13 des Lochs 7 in dieser Richtung 15 teilweise oder ganz entspricht, zu erzeugen (Fig. 10, der innere Bereich 25 ist gestrichelt angedeutet).

Dabei wird der Laserstrahl 22, 22' in diesen ersten Abtragungsschritten in der Ebene der Oberfläche 14 verfahren. Somit werden nahezu keine Aufschmelzungen im Bereich der Trennfläche des Diffusors 13 erzeugt und es bilden sich dort keine Risse aus und exakte Geometrien können so erzeugt werden.

Dann erst wird der innere Bereich 25 mit längeren Laserpulslängen (> 100ns, insbesondere > 500ns) abgetragen (letzte Abtragungsschritte).

Das Verfahren kann angewendet werden bei neu hergestellten Bauteilen 1, die zum ersten Mal abgegossen wurden.

Ebenso kann das Verfahren verwendet werden bei wieder aufzuarbeitenden Bauteilen 1.

Wiederaufarbeitung (Refurbishment) bedeutet, dass Bauteile 1, die im Einsatz waren, beispielsweise von Schichten getrennt werden und nach Reparatur wie z.B. Auffüllen von Rissen und Entfernung von Oxidations- und Korrosionsprodukten wieder neu beschichtet werden.

Hier werden beispielsweise Verunreinigungen oder Beschichtungsmaterial, das erneut aufgebracht wurde (Fig. 11) und in die Löcher 7 gelangte, mit einem Laser 19, 19' entfernt. Oder spezielle Ausformungen (Diffusor) im Schichtbereich werden nach der Wiederbeschichtung bei der Aufarbeitung neu hergestellt.

## Patentansprüche

1. Verfahren zur Herstellung eines Lochs (7) in einem Schichtsystem (1, 120, 130, 155),
das eine metallische Zwischenschicht und eine äußere keramische Schicht aufweist mittels zumindest einem gepulsten Energiestrahl (22, 22', 22"),
insbesondere mittels zumindest einem gepulsten Laserstrahl (22, 22', 22") zumindest eines Lasers (19, 19', 19"), der eine Pulslänge aufweist,
wobei das Verfahren in einer Vielzahl von Abtragungsschritten ausgeführt wird und
in einem der ersten Abtragungsschritte andere Pulslängen verwendet werden als in einem der letzten Abtragungsschritte,
**dadurch gekennzeichnet, dass**
das Schichtsystem (1) zumindest aus einem metallischen Substrat (4) und einer äußersten keramischen Schicht besteht, wobei das Substrat (4) vorzugsweise eine nickel-, kobalt- oder eisenbasierte Superlegierung ist,
dass bei den Abtragungsschritten mit den kürzeren Pulslängen der zumindest eine Energiestrahl (22, 22', 22") über die Oberfläche des Bauteils ((1, 120, 130, 155)) verfahren wird und insbesondere bei den längeren Pulsdauern der zumindest eine Energiestrahl (22, 22', 22") nicht über die Oberfläche des Bauteils (1, 120, 130, 155) verfahren wird, um Material im Bereich einer Ebene des herzustellenden Lochs (7) abzutragen,
dass die längeren Pulslängen verwendet werden,
um eine metallische Zwischenschicht (16) oder das metallische Substrat (4) abzutragen und
dass die längeren Pulse eine Energie von 6 bis 10 Joule, insbesondere 8 Joule aufweisen,
dass insbesondere bei den längeren Pulsen eine Pulsdauer von 0,4ms verwendet wird
und dass insbesondere nur zwei verschiedene Pulslängen verwendet werden.

2. Verfahren nach Anspruch 1,
**dadurch gekennzeichnet, dass**
während der ersten Abtragungsschritte längere Pulslängen verwendet werden als in einem der letzten Abtragungsschritte.

3. Verfahren nach Anspruch 1,
**dadurch gekennzeichnet, dass**
während der ersten Abtragungsschritte kürzere Pulslängen verwendet werden als in einem der letzten Abtragungsschritte.

4. Verfahren nach Anspruch 1, 2 oder 3,
**dadurch gekennzeichnet, dass**
die Pulslänge während des Fortschreitens des Verfahrens zur Erzeugung des Lochs (7) diskontinuierlich verändert wird.

5. Verfahren nach Anspruch 1,
**dadurch gekennzeichnet, dass**
nur ein Laser (19) mit einer Wellenlänge,
insbesondere von 1064nm verwendet wird.

6. Verfahren nach Anspruch 1,
**dadurch gekennzeichnet, dass**
für die zwei Laser (19', 19'') unterschiedliche Wellenlängen (1064nm und 532nm) verwendet werden.

7. Verfahren nach Anspruch 1 oder 3,
**dadurch gekennzeichnet, dass**
während der ersten Abtragungsschritte Pulslängen kleiner gleich 500ns, insbesondere kleiner gleich 100ns, und
in einem der letzten Abtragungsschritte Pulslängen größer 100ns,
insbesondere größer 500ns, aber
insbesondere kleiner 10ms verwendet werden.

8. Verfahren nach Anspruch 1 oder 2,
**dadurch gekennzeichnet, dass**
während der ersten Abtragungsschritte Pulslängen größer 100ns, insbesondere größer 500ns, aber
insbesondere kleiner 10ms
und in einem der letzten Abtragungsschritte Pulslängen kleiner gleich 500ns, insbesondere kleiner gleich 100ns, verwendet werden.

9. Verfahren nach Anspruch 1, 3 oder 7,
**dadurch gekennzeichnet, dass**
zuerst ein äußerer Oberbereich (13) des Lochs (7) mit kürzeren Pulslängen,
und dann ein unterer Bereich (10) des Lochs (7) mit längeren Pulslängen erzeugt wird.

10. Verfahren nach Anspruch 1, 3 oder 7,
**dadurch gekennzeichnet, dass**
zuerst ein äußerer Randbereich (28) mit kürzeren Pulslängen erzeugt wird
und dann ein innerer Bereich (25) des Lochs (7) mit längeren Pulslängen erzeugt wird.

11. Verfahren nach Anspruch 1, 2 oder 8,
**dadurch gekennzeichnet, dass**
zuerst ein innerer Bereich (25) mit kürzeren Pulslängen, und dann ein äußerer Randbereich (28) des Lochs (7) mit längeren Pulslängen erzeugt wird.

12. Verfahren nach einem der Ansprüche 1 bis 4,
**dadurch gekennzeichnet,**
**dass** ausgehend von einer Oberfläche (14) des Bauteils (1) das Loch (7) hergestellt wird und
**dass** von der äußeren Oberfläche (14) hin bis zur Tiefe des Lochs (7) die Pulslänge verändert wird.

13. Verfahren nach einem der Ansprüche 1, 2, 4, 5 - 7 - 12,
**dadurch gekennzeichnet, dass**
die längeren Pulse eine Leistung von 10 bis 50 Kilowatt, insbesondere 20 Kilowatt aufweisen.

14. Verfahren nach einem der Ansprüche 1, 3, 4, 7 - 12,
**dadurch gekennzeichnet, dass**
die Energie der kürzeren Pulse im oder unter dem zweistelligen,
insbesondere im einstelligen Millijoule-Bereich liegt.

15. Verfahren nach Anspruch 1, 2, 3, 4, 7 - 12 oder 14,
**dadurch gekennzeichnet, dass**
die kürzeren Pulse eine Leistung im einstelligen Kilowattbereich aufweisen.

16. Verfahren nach einem der Anspruch 1, 2 - 3, 5, 8 - 14,
**dadurch gekennzeichnet, dass**
bei den längeren Pulsen die Querschnittsfläche (A) des abgetragenen Bereichs auf dem Bauteil (1) der Querschnittsfläche des herzustellenden Lochs (7, 10) entspricht.

17. Verfahren nach einem oder mehreren der vorherigen Ansprüche,
**dadurch gekennzeichnet, dass**
bei der Verwendung von längeren oder kürzeren Pulsen (16) eine Ausgangsleistung des Lasers (19, 19', 19") konstant ist, solange die Pulslänge für die längeren oder kürzeren Pulse sich nicht ändert.

18. Verfahren nach einem oder mehreren der vorherigen Ansprüche,
**dadurch gekennzeichnet, dass**
bei den längeren Pulsen eine Ausgangsleistung des Lasers (19, 19', 19") von mehreren 100 Watt,
insbesondere von 500 Watt verwendet wird.

19. Verfahren nach einem oder mehreren der vorherigen Ansprüche,
**dadurch gekennzeichnet, dass**
bei den kürzeren Pulsen eine Ausgangsleistung des Lasers (19, 19', 19") kleiner 300 Watt ist.
